# EUROPÄISCHE PATENTSCHRIFT

(11) **EP 3 347 802 B1**
(45) Veröffentlichungstag und Bekanntmachung des Hinweises auf die Patenterteilung: **01.04.2020**
(21) Anmeldenummer: 16751242.5
(22) Anmeldetag: 03.08.2016
(51) Int. Cl.: G06F 3/048, G06F 3/0481, G06F 3/0486

(54) **KRAFTFAHRZEUG-BEDIENVORRICHTUNG MIT ZWEI GEKOPPELTEN BILDSCHIRMEN**
VEHICLE INTERFACE WITH TWO COUPLED DISPLAYS
INTERFACE DE VÉHICULE AUTOMOBILE AVEC DEUX ÉCRANS COUPLÉS

(30) Priorität: 11.09.2015 DE 102015011647
(43) Veröffentlichungstag der Anmeldung: 18.07.2018
(73) Patentinhaber: Audi AG, 85045 Ingolstadt (DE)
(72) Erfinder: BOUAZIZ, Tahar, 85055 Ingolstadt (DE); PAULA, Simone, 86641 Rain (DE)
(86) Internationale Anmeldenummer: PCT/EP2016/068488
(87) Internationale Veröffentlichungsnummer: WO 2017/041962

(56) Entgegenhaltungen:
- EP-A2- 2 169 524
- EP-A2- 2 775 387
- US-A1- 2012 066 602
- Anonymous: "Dual screen infotainment systems prove a worrying trend | Digital Trends", , 12. Mai 2015 (2015-05-12), XP055307809, Gefunden im Internet: URL:https://web.archive.org/web/2015051207 5957/http://www.digitaltrends.com/cars/scr een-two-far-acura-infiniti-start-worrying- trend-infotainment/? [gefunden am 2016-10-05]

## Beschreibung

Die Erfindung betrifft eine Bedienvorrichtung für ein Kraftfahrzeug. Die Bedienvorrichtung weist zwei berührungssensitive Bildschirmeinheiten sowie eine Steuereinrichtung zum Darstellen von Graphikelementen auf den Bildschirmeinheiten auf. Zu der Erfindung gehören auch ein Kraftfahrzeug mit der Bedienvorrichtung sowie ein Verfahren zum Betreiben der Bedienvorrichtung.

Bei einem Kraftfahrzeug kann vorgesehen sein, mehr als eine berührungssensitive Bildschirmeinheit (Touchscreen) bereitzustellen. Auf jeder Bildschirmeinheit kann durch die besagte Steuereinrichtung jeweils zumindest ein Graphikelement dargestellt werden, also beispielsweise ein Icon oder eine Bedienfläche (Button, Schieber, Drehsteller). Hierbei sollte dann dem Benutzer die Möglichkeit gegeben sein, selbständig festzulegen, welches Graphikelement er auf welcher Bildschirmeinheit dargestellt bekommen möchte und wo auf der ausgewählten Bildschirmeinheit das Graphikelement angezeigt werden soll.

In der EP 2 169 524 A2 ist eine Vorrichtung zur Steuerung eines Drag-and-Drop-Vorgangs offenbart. Die Vorrichtung ermöglicht es, ein Schlüsselbild mittels eines Drag-and-Drop-Vorgangs bildschirmübergreifend zu verschieben. Die Vorrichtung zeigt dabei ein reduziertes Bild eines zweiten Bildschirms auf einem ersten Bildschirm. Durch ein Ablegen des Schlüssels innerhalb des reduzierten Bildes kann dieses von dem ersten Bildschirm auf den zweiten Bildschirm verschoben werden.

Die US 2012/0066602 A1 offenbart ein Verfahren und Systeme für ein Teilen von Inhalten mittels einer Zieh- und Ablegeeingabe in einer Mehrgeräteumgebung. Es ist vorgesehen, dass ein Inhalt durch ein Verschieben eines dem Inhalt zugeordneten ersten Graphikelements auf ein, einem anderen Gerät zugeordnetem zweiten Graphikelement, dem anderen Gerät bereitgestellt werden kann.

Der Erfindung liegt die Aufgabe zugrunde, eine Bedienvorrichtung mit mehreren Bildschirmeinheiten bereitzustellen, die eine benutzergesteuerte Anordnung eines Graphikelements auf einer der Bildschirmeinheiten ermöglicht.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist eine Bedienvorrichtung für ein Kraftfahrzeug bereitgestellt. Die erfindungsgemäße Bedienvorrichtung weist zumindest zwei berührungssensitive Bildschirmeinheiten auf, das heißt eine berührungssensitive erste Bildschirmeinheit und eine von der ersten Bildschirmeinheit beabstandet angeordnete berührungssensitive zweite Bildschirmeinheit. Durch die beabstandete Anordnung ist also zwischen den beiden Bildschirmeinheiten ein Abstand größer 0, beispielsweise ein Spalt oder eine Lücke, gegeben. Die Bedienvorrichtung weist des Weiteren eine Steuereinrichtung zum Darstellen eines ersten Graphikelements auf der ersten Bildschirmeinheit und eines zweiten Graphikelements auf der zweiten Bildschirmeinheit auf. Mit Darstellen eines Graphikelements ist hierbei gemeint, dass die Steuereinrichtung entsprechende Graphikdaten bereitstellt, die dann durch die jeweilige Bildschirmeinheit angezeigt oder ausgegeben werden. Die beiden Graphikelemente können beispielsweise in der beschriebenen Weise jeweils ein Icon oder eine Bedienfläche oder ein Menüeintrag zum Auslösen einer Gerätefunktion sein.

Möchte der Benutzer nun das erste Graphikelement auf der zweiten Bildschirmeinheit zusammen mit dem zweiten Graphikelement darstellen, so muss er das erste Graphikelement auf die zweite Bildschirmeinheit übertragen und die relative Lage des ersten Graphikelements bezüglich des zweiten Graphikelements festlegen. Auf einer einzelnen Bildschirmeinheit ist dies einfach durch sogenanntes "Verschieben" möglich. Da aber nun die beiden Bildschirmeinheiten voneinander beabstandet sind, muss dem Benutzer ermöglicht werden, das erste Graphikelement über den Abstand hinweg auf die zweite Bildschirmeinheit zu verschieben. Hierzu sieht die Erfindung vor, dass die Steuereinrichtung dazu eingerichtet ist, einen vorbestimmten Wechselbefehl und danach einen vorbestimmten Verschiebebefehl von einem Benutzer zu empfangen und in Abhängigkeit von dem Wechselbefehl das erste Graphikelement auf der zweiten Bildschirmeinheit darzustellen und in Abhängigkeit von dem Verschiebebefehl eine relative Lage des ersten Graphikelements und des zweiten Graphikelements zueinander für die Darstellung auf der zweiten Bildschirmeinheit einzustellen. Durch den Wechselbefehl legt der Benutzer fest, welches Graphikelement auf der ersten Bildschirmeinheit als das erste Graphikelement auf die zweite Bildschirmeinheit übertragen werden soll. Durch den Verschiebebefehl legt der Benutzer die Relativlage zwischen erstem Graphikelement und zweitem Graphikelement für die Darstellung auf der zweiten Bildschirmeinheit fest. Die Steuereinrichtung kann den Wechselbefehl und/oder den Verschiebebefehl über die erste und/oder die zweite Bildschirmeinheit empfangen. Da beide Bildschirmeinheiten berührungssensitiv sein, kann dies in an sich bekannter Weise durch eine entsprechende Berührung der berührungssensitiven Anzeigefläche der Bildschirmeinheit erfolgen. Zum Erzeugen der Berührungssensitivität kann die Anzeigefläche beispielsweise mit einer kapazitiven Sensormatrix ausgestaltet sein.

Durch die Erfindung ergibt sich der Vorteil, dass der Benutzer mittels des Wechselbefehls und des Verschiebebefehls das erste Graphikelement von der ersten Bildschirmeinheit auf die zweite Bildschirmeinheit übertragen und mittels des Verschiebebefehls die relative Lage des ersten Graphikelements bezüglich des zweiten Graphikelements eingestellt oder festgelegt werden kann. Somit kann der Benutzer den Anzeigeort des ersten Graphikelements im Kraftfahrzeug nach seinem Bedürfnis dahingehend festlegen, dass er sowohl einen Wechsel das Anzeigeorts von der ersten Bildschirmeinheit zur zweiten Bildschirmeinheit auslösen kann als auch für die Darstellung auf der zweiten Bildschirmeinheit die Relativlage des ersten Graphikelements bezüglich des zweiten Graphikelements festlegen oder einstellen kann. Bevorzugt wird durch das Ausführen des Wechselbefehls das erste Graphikelement von der ersten Bildschirmeinheit gelöscht.

Die Steuereinrichtung ist dazu eingerichtet, den Verschiebebefehl über die erste Bildschirmeinheit zu empfangen. Mit anderen Worten verschiebt oder bewegt der Benutzer das erste Graphikelement mittels eines Verschiebebefehls, den er an der ersten Bildschirmeinheit eingibt. Beispielsweise kann also der Benutzer auf der ersten Bildschirmeinheit Verschiebeeingaben zum Festlegen der Relativlage durchführen, wobei sich dann das bereits auf der zweiten Bildschirmeinheit dargestellte erste Graphikelement auf der zweiten Bildschirmeinheit gemäß den Verschiebeeingaben bewegt. Hierdurch ergibt sich der Vorteil, dass der Benutzer nach Auswahl des ersten Graphikelements für den Wechselbefehl die Hand nicht von der ersten Bildschirmeinheit entfernen muss, sondern auch den Verschiebebefehl an der ersten Bildschirmeinheit ausführen kann. Hierdurch ist es für den Nutzer nicht nötig, mit der Hand von der ersten Bildschirmeinheit zur zweiten Bildschirmeinheit zu wechseln.

Die Steuereinrichtung ist dazu eingerichtet, bei Empfangen des Wechselbefehls, durch welchen das erste Graphikelement für den Wechsel festgelegt wird, zunächst auch das zweite Graphikelement auf der ersten Bildschirmeinheit dazustellen und dann den Verschiebebefehl zu empfangen. Mit anderen Worten wird nach Auswählen des ersten Graphikelements, das heißt nach Eingeben des Wechselbefehls, der Wechselbefehl nicht sofort ausgeführt, sondern zunächst das zweite Graphikelement ebenfalls auf der ersten Bildschirmeinheit dargestellt, sodass der Benutzer den Verschiebebefehl an der ersten Bildschirmeinheit ausführen kann und hierbei die Relativlage des ersten Graphikelements bezüglich des zweiten Graphikelements auf der ersten Bildschirmeinheit unmittelbar dargestellt bekommt. Hierdurch ergibt sich der Vorteil, dass die Relativlage korrekt über die erste Bildschirmeinheit festgelegt werden kann. Das zweite Graphikelement kann beispielsweise opak oder teiltransparent auf der ersten Bildschirmeinheit dargestellt werden. Eine teiltransparente Darstellung ergibt den Vorteil, dass während des Ausführens oder Eingebens des Verschiebebefehls keine Verdeckung durch das zweite Graphikelement auf der ersten Bildschirmeinheit erfolgt.

Um einen Wechselbefehl auf der berührungssensitiven ersten Bildschirmeinheit zu erzeugen, ist es vorgesehen, dass die Steuereinrichtung dazu eingerichtet ist, als den Wechselbefehl eine Berührung des ersten Graphikelements zu erkennen, wobei eine Berührdauer der Berührung größer als ein vorbestimmter Mindestwert ist. Mit anderen Worten muss der Benutzer auf der ersten Bildschirmeinheit das Graphikelement mit dem beschriebenen Bedienelement, also beispielsweise dem Finger berühren und diese Berührung für eine Berührdauer aufrecht erhalten, die länger oder größer als der Mindestwert ist. Dann erkennt die Steuereinrichtung, dass es sich um den Wechselbefehl zum Übertragen oder Wechseln des ersten Graphikelements auf die zweite Bildschirmeinheit handelt. Dann kann in der beschriebenen Weise beispielsweise das zweite Graphikelement ebenfalls auf der ersten Bildschirmeinheit dargestellt werden, sodass der Benutzer die Relativlage der beiden Graphikelemente festlegen kann.

Es ist vorgesehen, dass der Wechselbefehl umfasst, dass der Benutzer zusätzlich das erste Graphikelement an einen Rand der ersten Bildschirmeinheit verschieben muss. Hierdurch kann zwischen einer Verschiebung innerhalb der ersten Bildschirmeinheit und dem Wechselbefehl unterschieden werden.

Zu der Erfindung gehören auch optionale Weiterbildungen, durch deren Merkmale sich zusätzliche Vorteile ergeben.

Eine Weiterbildung sieht vor, dass die Steuereinrichtung dazu eingerichtet ist, bei auf der ersten Bildschirmeinheit dargestelltem zweiten Graphikelement erst nach Empfangen eines Bestätigungssignals den bereits empfangenen Wechselbefehl auszuführen. Während also das zweite Graphikelement auf der ersten Bildschirmeinheit dargestellt wird, kann der Benutzer so lange den Verschiebebefehl eingeben, also die Relativlage zwischen den Graphikelementen festlegen, bis durch das Bestätigungssignal das erste Graphikelement und damit auch das zweite Graphikelement auf der zweiten Bildschirmeinheit dargestellt werden, also der eigentliche Wechsel des ersten Graphikelements vom der ersten Bildschirmeinheit zur zweiten Bildschirmeinheit durchgeführt wird.
In Bezug auf das Bestätigungssignal sieht eine Weiterbildung vor, dass durch das Bestätigungssignal ein Lösen eines Bedienelements des Benutzers von der ersten Bildschirmeinheit signalisiert wird. Bei dem Bedienelement kann es sich beispielsweise um einen Finger des Benutzers handeln. Mit anderen Worten wird der Wechselbefehl dann ausgeführt, wenn der Benutzer den Finger von der ersten Bildschirmeinheit entfernt oder löst. Nachdem der Benutzer also das erste Graphikelement in Bezug auf das zweite Graphikelement in die gewünschte Relativlage verschoben hat und das Bedienelement, beispielsweise den Finger, von der Bildschirmeinheit entfernt, gilt der Verschiebebefehl als beendet oder vollständig eingegeben. Danach wird dann der Wechselbefehl endgültig ausgeführt.

Alternativ dazu kann vorgesehen sein, dass durch das Bestätigungssignal eine Betätigung eines auf der ersten oder der zweiten Bildschirmeinheit dargestellten vorbestimmten Bedienfelds signalisiert wird. Beispielsweise kann also ein Bestätigungs-Button oder Bestätigungs-Icon vorgesehen sein. Hierdurch ergibt sich der Vorteil, dass der Benutzer auf der ersten Bildschirmeinheit umgreifen kann oder mehrfache Verschiebebewegungen für das erste Graphikelement durchführen kann, ohne dass hierdurch verfrüht oder unerwünscht der Verschiebebefehl als beendet erkannt und der Wechselbefehl ausgeführt wird.

Gemäß einer Weiterbildung ist die Steuereinrichtung dazu eingerichtet, als das zweite Graphikelement ein Containerelement zum Präsentieren oder Sammeln von Programmfavoriten bereitzustellen. Beispielsweise kann es sich also bei dem zweiten Graphikelement um eine Favoritenleiste oder einen Rahmen handeln, innerhalb welchem andere Graphikelemente, also insbesondere Icons oder Buttons, angeordnet werden können. Hierdurch ergibt sich der Vorteil, dass der Benutzer Graphikelemente von der ersten Bildschirmeinheit, also insbesondere das erste Graphikelement, innerhalb des Containerelements auf der zweiten Bildschirmeinheit sammeln oder anordnen kann, um hierdurch die jeweils mittels eines Wechselbefehls oder eines Verschiebebefehls in dem Containerelement angeordneten Graphikelemente in direktem Zugriff auf der zweiten Bildschirmeinheit zu haben.

Eine Weiterbildung sieht vor, dass die Steuereinrichtung dazu eingerichtet ist, als den Verschiebebefehl eine Verschiebe- und Loslass-Bewegung (Drag-and-drop-Bewegung) zu erkennen. Dies ergibt den Vorteil, dass der Benutzer mit der Bewegung seiner Hand eins zu eins die Verschiebung des ersten Graphikelements bezüglich des zweiten Graphikelements festlegt. Es ist also keine Umsetzung der Bewegung nötig, wie dies beispielsweise bei Verwendung eines Joysticks oder eines Schiebers nötig wäre.

Wie bereits ausgeführt, gehört zu der Erfindung auch ein Kraftfahrzeug. Das erfindungsgemäße Kraftfahrzeug weist eine Ausführungsform der erfindungsgemäßen Bedienvorrichtung auf. Die Bedienvorrichtung ist hierbei mit zumindest einem Fahrzeuggerät gekoppelt. Das zumindest eine Fahrzeuggerät kann beispielsweise ein Infotainmentsystem und/oder eine Klimatisierungseinrichtung des Kraftfahrzeugs umfassen. Die Bedienvorrichtung ist dazu ausgelegt, bei einer Berührung eines ersten Graphikelements eine vorbestimmte, dem ersten Graphikelement zugeordnete Gerätefunktion bei dem zumindest einen Fahrzeuggerät zu aktivieren. Mit anderen Worten handelt es sich bei dem ersten Graphikelement also um ein Icon oder einen Button oder einen Menüeintrag, um eine zugeordnete Gerätefunktion auszuwählen oder auszulösen oder zu aktivieren. Bei dem erfindungsgemäßen Kraftfahrzeug kann der Benutzer dieses erste Graphikelement von der ersten Bildschirmeinheit auf die zweite Bildschirmeinheit übertragen oder wechseln, sodass ihm das erste Graphikelement auf der zweiten Bildschirmeinheit zur Verfügung steht.

Schließlich gehört zu der Erfindung in der beschriebenen Weise auch ein Verfahren zum Betreiben einer Bedienvorrichtung eines Kraftfahrzeugs. Eine Steuereinrichtung stellt ein erstes Graphikelement auf einer berührungssensitiven ersten Bildschirmeinheit und ein zweites Graphikelement auf einer von der ersten Bildschirmeinheit beabstandet angeordneten berührungssensitiven zweiten Bildschirmeinheit dar. Um in der beschriebenen Weise das erste Graphikelement von der ersten Bildschirmeinheit auf die zweite Bildschirmeinheit zu übertragen, empfängt die Steuereinrichtung über die erste und/oder die zweite Bildschirmeinheit einen vorbestimmten Wechselbefehl und danach einen vorbestimmten Verschiebebefehl von einem Benutzer. In Abhängigkeit von dem Wechselbefehl wird das erste Graphikelement auf der zweiten Bildschirmeinheit dargestellt und in Abhängigkeit von dem Verschiebebefehl eine Relativlage des ersten Graphikelements und des zweiten Graphikelements zueinander für die Darstellung auf der zweiten Bildschirmeinheit eingestellt. Wie bereits ausgeführt, können der Wechselbefehl und der Verschiebebefehl dahingehend ineinander verschachtelt sein, dass zunächst der Wechselbefehl empfangen und vor Ausführen des Wechselbefehls zunächst der Verschiebebefehl empfangen wird und die Relativlage beispielsweise auf der ersten Bildschirmeinheit festgelegt wird, bevor dann der eigentliche Wechselbefehl abschließend ausgeführt wird.

Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs,
- Fig. 2: eine Bedienvorrichtung des Kraftfahrzeugs von Fig. 1 während einer Eingabe eines Verschiebebefehls, und
- Fig. 3: die Bedienvorrichtung von Fig. 2 nach Ausführen eines Wechselbefehls.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

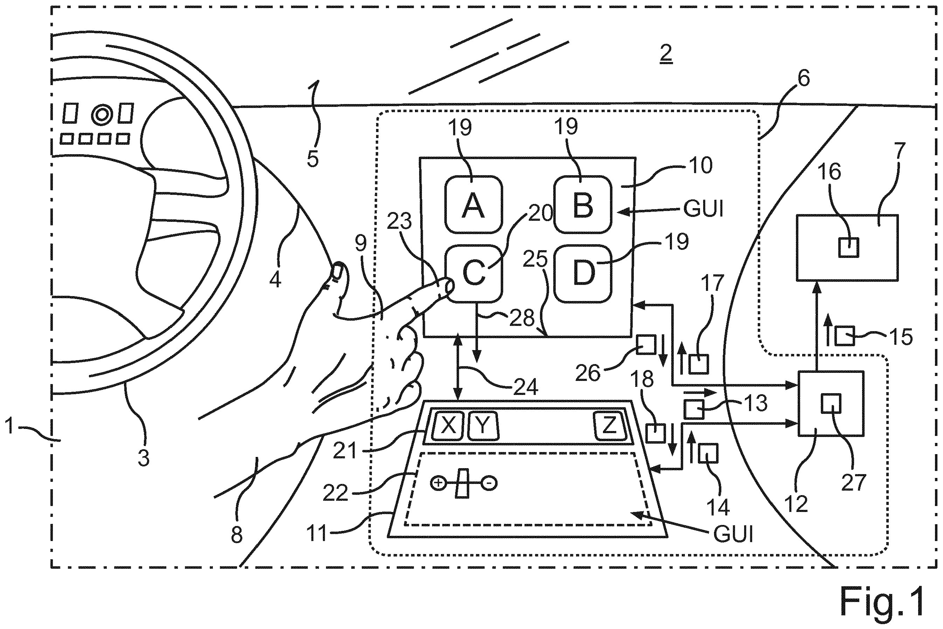

Fig. 1 zeigt ein Kraftfahrzeug 1, bei dem es sich beispielsweise um einen Kraftwagen, insbesondere einen Personenkraftwagen, handeln kann. Dargestellt ist ein Fahrzeuginnenraum 2 mit einem Lenkrad 3, einer Mittelkonsole 4 und einer Windschutzscheibe 5. Das Kraftfahrzeug 1 weist eine Bedienvorrichtung 6 auf, mittels welcher zumindest ein Fahrzeuggerät 7 von einem Benutzer 8 bedient werden kann. Von dem Benutzer 8 ist in Fig. 1 lediglich eine Hand 9 dargestellt. Bei dem zumindest einen Fahrzeuggerät 7 kann es sich beispielsweise um ein Informations-Unterhaltungssystem (Infotainmentsystem) und/oder eine Klimatisierungseinrichtung handeln.

Die Bedienvorrichtung 6 weist zumindest zwei Bildschirmeinheiten auf, nämlich eine erste Bildschirmeinheit 10 und eine zweite Bildschirmeinheit 11. Beide Bildschirmeinheiten 10, 11 sind berührungssensitiv, das heißt es handelt sich um Berührbildschirme oder Touchscreens. Die Bildschirmeinheiten 10, 11 sind mit einer Steuereinrichtung 12 gekoppelt. Die Steuereinrichtung 12 kann beispielsweise auf der Grundlage eines Mikrocontrollers oder eines Mikroprozessors realisiert sein. Die Steuereinrichtung 12 kann in Abhängigkeit von Berührsignalen 13, 14 der berührungssensitiven Bildschirmeinheiten 10, 11 jeweils ein Steuersignal 15 für das zumindest eine Fahrzeuggerät 7 erzeugen. Durch das Steuersignal 15 wird dann jeweils eine Gerätefunktion 16 in dem zumindest einen Fahrzeuggerät 7 aktiviert.

Durch die Steuereinrichtung 12 ist des Weiteren auf den beiden Bildschirmeinheiten 10, 11 eine graphische Benutzerschnittstelle GUI realisiert, welche dem Benutzer 8 die auswählbaren oder auslösbaren Gerätefunktionen 16 anzeigt. Die graphische Benutzerschnittstelle GUI wird durch die Steuereinrichtung 12 mittels Graphikdaten 17, 18 auf der jeweiligen Bildschirmeinheit 10, 11 erzeugt oder eingestellt oder dargestellt. Gezeigt sind von der GUI jeweils Graphikelemente 19, 20, 21, 22. Beispielhaft sei angenommen, dass es sich bei den Graphikelementen 19, 20 auf der Bildschirmeinheit 10 um Bedienelemente zum Auslösen einer Gerätefunktion 16 handelt. Bei dem Graphikelement 21 kann es sich beispielsweise um ein Containerelement handeln, welches zum gesammelten und räumlich geordneten Darstellen mehrerer Bedienelemente wie der Graphikelemente 19, 20 handeln kann. Es handelt sich also bei dem Graphikelement 21 damit beispielsweise um eine sogenannte Shortcut-Leiste oder Abkürzungsleiste oder ein entsprechendes Shortcut-Menü handeln. Das Graphikelement 22 kann zum Steuern oder Bedienen eines Teils des zumindest einen Fahrzeuggeräts 7 vorgesehen sein. Beispielsweise kann es sich um eine Bedienschnittstelle für eine Klimatisierungseinrichtung handeln. Für die weitere Erläuterung der Erfindung ist das Graphikelement 22 nicht relevant.

In dem in Fig. 1 veranschaulichten Beispiel möchte der Benutzer 8 das Graphikelement 20 von der ersten Bildschirmeinheit 10 auf die zweite Bildschirmeinheit 11 verschieben und in dem Containerelement, das heißt dem zweiten Graphikelement 21, anordnen. Dann kann der Benutzer 8 unabhängig von einem aktuellen Anzeigeinhalt der Bildschirmeinheit 10 die Gerätefunktion 16, die dem Graphikelement 20 zugeordnet ist, direkt über die zweite Bildschirmeinheit 11 in dem Containerelement anwählen oder aktivieren.

Problematisch hierbei ist, dass der Benutzer 8 mit einem Finger 23 der Hand 9 nicht einfach mittels des bekannten Drag-and-drop-Verfahrens das Graphikelement 20 von der ersten Bildschirmeinheit 10 auf die zweite Bildschirmeinheit 11 hinüberschieben kann. Grund dafür ist, dass die Bildschirmeinheiten 10, 11 durch einen Abstand 24 voneinander beabstandet sind, der sensorlos ist, der also nicht Teil der berührungssensitiven Oberflächen der Bildschirmeinheiten 10, 11 ist.

Der Benutzer 8 kann also mit dem Finger 23 in dem an sich bekannten Drag-and-drop-Verfahren das Graphikelement 20 zwar bis an einen unteren Bildschirmrand 25 bewegen. Dort müsste er aber den Finger 23 von der Bildschirmeinheit 10 lösen und zur Bildschirmeinheit 11 übergreifen. Dies erfordert zum einen eine gezielte Ausrichtung der Hand 9 zur Bildschirmeinheit 11 hin. Dies lenkt den Fahrer vom Straßenverkehr ab. Zum anderen muss der Steuervorrichtung 12 klar sein, dass der Benutzer 8 den Verschiebevorgang auf die Bildschirmeinheit 11 fortsetzen möchte. Dies ist softwaretechnisch schwer zu realisieren. Bei dem Kraftfahrzeug 1 gibt es hierzu eine Lösung, die es dem Benutzer 8 ermöglicht, das Graphikelement 20 in dem Containerelement des Graphikelements 21 anzuordnen, ohne dass er hierfür von der Bildschirmeinheit 10 auf die Bildschirmeinheit 11 umgreifen muss.

Dazu erzeugt der Benutzer 8 zunächst einen Wechselbefehl 26, indem er beispielsweise mit dem Finger 23 länger als eine vorbestimmte Mindestzeitdauer 27 das Graphikelement 20 berührt. Die Mindestzeitdauer 27 kann beispielsweise durch die Steuereinrichtung 12 überwacht werden. Danach ist das Graphikelement 20 mit dem Finger 23 auf der Bildschirmeinheit 10 verschiebbar. Der Benutzer 8 führt ein erste Verschiebebewegung 28 zum unteren Bildschirmrand 25 hin aus.

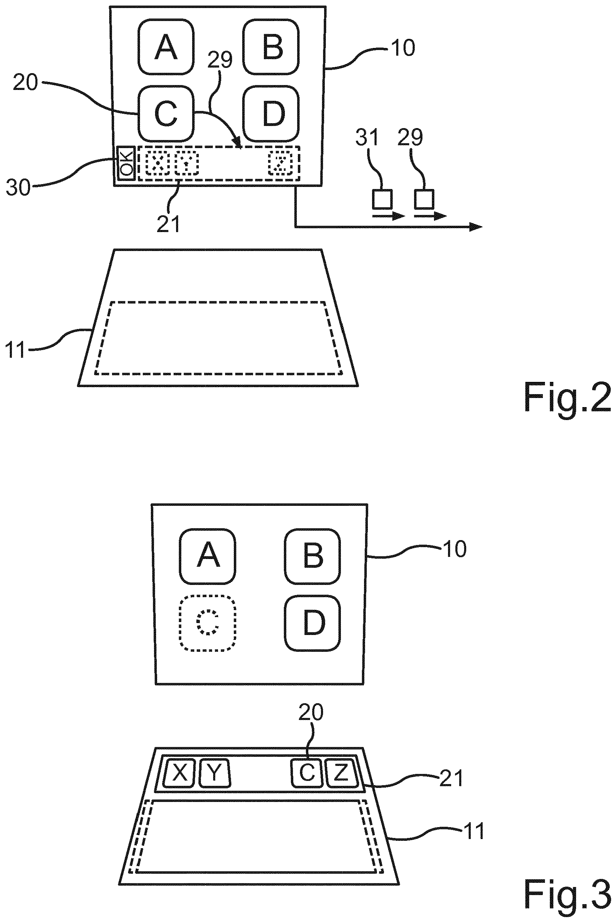

Fig. 2 veranschaulicht die daraufhin erzeugte Reaktion der Steuereinrichtung 12. Die Steuereinrichtung 12 stellt das Graphikelement 21, das heißt das Containerelement, auf der ersten Bildschirmeinheit 10 dar. Die Darstellung kann in derselben Weise erfolgen wie auf dem Bildschirmeinheit 11. In Fig. 2 ist allerdings eine Alternative dargestellt, bei welcher das Graphikelement 21 teiltransparent auf der Bildschirmeinheit 10 dargestellt ist. Auf der Bildschirmeinheit 11 kann weiterhin ebenfalls das Containerelement dargestellt bleiben. Fig. 2 zeigt allerdings eine Alternative, bei welcher das zweite Graphikelement 21 nur einmal dargestellt wird, nämlich auf der Bildschirmeinheit 10. Der Benutzer kann nun einen Verschiebebefehl 29 erzeugen, durch welchen er die Position des Graphikelements 20 bezüglich des Graphikelements 21 festlegt, also die Position des Graphikelements 20 innerhalb des Containerelements. Dieser Verschiebebefehl kann beispielsweise wieder eine Wischbewegung oder Ziehbewegung des Fingers 23 auf der berührungssensitiven Bildschirmeinheit 10 sein. Der Benutzer 8 legt hierdurch die Position des Graphikelements 20 innerhalb des Containerelements fest, das heißt die Relativlage des Graphikelements 20 bezüglich des Graphikelements 21.

Danach muss der Benutzer signalisieren, dass er mit dem Anordnen des Graphikelements 20 bezüglich des Graphikelements 21 fertig ist und die Darstellung des Graphikelements 21 mit dem Graphikelement 20 auf der Bildschirmeinheit 11 erfolgen kann. Hierzu kann im einfachsten Fall vorgesehen sein, dass der Benutzer 8 den Finger 23 von der Bildschirmeinheit 10 löst. Mit anderen Worten beendet er die Berührung der Bildschirmeinheit 10. Alternativ dazu kann ein Bedienelement 30 vorgesehen sein, das bei Betätigen ein entsprechendes vorbestimmtes Bestätigungssignal erzeugt. Das Bedienelement 30 kann beispielsweise eine Bedienfläche oder ein Button sein.

Fig. 3 zeigt, wie durch die Steuereinrichtung 12 nach Empfangen des Bestätigungssignals 31 die Graphikelemente 20, 21 gemeinsam auf der Bildschirmeinheit 11 dargestellt werden. Die Relativlage des Graphikelements 20 bezüglich des Graphikelements 21 hat der Benutzer auf der Bildschirmeinheit 10 durch den Verschiebebefehl 29 festgelegt. Die Relativlage ist nun auch bei der Bildschirmeinheit 11 eingestellt, ohne dass der Benutzer 8 mit der Hand 9 zwischen der Bildschirmeinheit 10 und der Bildschirmeinheit 11 umgreifen musste.

Dem Benutzer 8 steht nun innerhalb des Containerelements das Graphikelement 20 für die Auswahl einer dem Graphikelement 20 zugeordneten Gerätefunktion 16 dauerhaft zur Verfügung, auch wenn der Bildschirminhalt der Bildschirmeinheit 10 verändert wird, weil der Benutzer beispielsweise das Bedienmenü wechselt.

Bei der Bedienvorrichtung 6 lassen sich also Funktionen, die jeweils durch ein Graphikelement repräsentiert sind, aus der oberen Bildschirmeinheit 10 an den unteren Rand 25 der oberen Bildschirmeinheit 10 ziehen, um dann auch auf der unteren Bildschirmeinheit 11 verfügbar zu sein. Solche Funktionen sind Favoriten, die häufig benutzt werden, beispielsweise für die Klimabedienung.

Insbesondere ist es möglich, ein erstes Graphikelement 20, das als Favorit ausgewählt werden soll, in der oberen Bildschirmeinheit 10 auszuwählen, beispielsweise durch längeres Halten des Fingers 23 auf dem Graphikelement 20. Dann wird das Containerelement, das heißt die Favoritenleiste, von der unteren Bildschirmeinheit 11 hoch zum unteren Rand 25 der oberen Bildschirmeinheit 10 verschoben. Diese Verschiebung ist nur vorübergehend oder temporär, während der Benutzer 8 das Graphikelement 20 in dem Containerelement anordnen. Das Graphikelement 20 kann hierbei beispielsweise durch Drag-and-drop hineingeschoben werden.

Danach wird dann das Containerelement wieder auf der unteren Bildschirmeinheit 11 zusammen mit dem hineingeschobenen Graphikelement 20 angezeigt.

Hierdurch ergibt sich eine vereinfachte Bedienbarkeit. Insbesondere erlaubt die Steuereinrichtung 12 hierdurch eine Kommunikation oder einen Austausch von Graphikelementen zwischen den beiden Touchscreens oder Bildschirmeinheiten 10, 11.

Insgesamt zeigt das Beispiel, wie durch die Erfindung bei einem 2-Touchscreen-Konzept Funktionen (Favoriten) vom einem Display über den Rand auf das andere Display verschoben werden können.

## Patentansprüche

1. Bedienvorrichtung (6) für ein Kraftfahrzeug (1), aufweisend:
- eine berührungssensitive erste Bildschirmeinheit (10) und eine von der ersten Bildschirmeinheit (10) beabstandet angeordnete berührungssensitive zweite Bildschirmeinheit (11), welche durch einen Abstand (24) voneinander beabstandet sind, der sensorlos ist,
- eine Steuereinrichtung (12) zum Darstellen eines ersten Graphikelements (20) auf der ersten Bildschirmeinheit (10) und eines zweiten Graphikelements (21) auf der zweiten Bildschirmeinheit (11),
**dadurch gekennzeichnet, dass**
die Steuereinrichtung (12) dazu eingerichtet ist,
- über die erste Bildschirmeinheit (10) einen vorbestimmten Wechselbefehl (26) zu empfangen,
- bei Empfangen des Wechselbefehls (26) zunächst das zweite Graphikelement (21) auf der ersten Bildschirmeinheit (10) darzustellen,
- danach über die erste Bildschirmeinheit (10) einen vorbestimmten Verschiebebefehl (29) von einem Benutzer (8) zu empfangen,
- in Abhängigkeit von dem Verschiebebefehl (29) für die Darstellung auf der zweiten Bildschirmeinheit (11) eine Relativlage des ersten Graphikelements (20) und des zweiten Graphikelements (21) zueinander einzustellen,
- in Abhängigkeit von dem Wechselbefehl (26) das erste Graphikelement (20) auf der zweiten Bildschirmeinheit (11) darzustellen,
wobei
- die Steuereinrichtung (12) dazu eingerichtet ist, als den Wechselbefehl (26) eine Berührung des ersten Graphikelements (20) zu erkennen, wobei eine Berührdauer der Berührung größer als ein vorbestimmter Mindestwert (27) ist, und
- der Wechselbefehl (26) ein Verschieben des ersten Graphikelements (20) an einen Rand der ersten Bildschirmeinheit (10) durch den Benutzer (8) umfasst.

2. Bedienvorrichtung (6) nach Anspruch 1, wobei die Steuereinrichtung (12) dazu eingerichtet ist, bei auf der ersten Bildschirmeinheit (10) dargestelltem zweiten Graphikelement (21) erst nach Empfangen eines Bestätigungssignals (31) den bereits empfangenen Wechselbefehl (26) auszuführen.

3. Bedienvorrichtung (6) nach Anspruch 2, wobei durch das Bestätigungssignal (31) ein Lösen eines Bedienelements (23) des Benutzers (8) von der ersten Bildschirmeinheit (10) oder eine Betätigung eines auf der ersten oder der zweite Bildschirmeinheit (10, 11) dargestellten vorbestimmten Bedienfeldes (30) signalisiert wird.

4. Bedienvorrichtung (6) nach einem der vorhergehenden Ansprüche, wobei die Steuereinrichtung (12) dazu eingerichtet ist, als das zweite Graphikelement (21) ein Containerelement zum Präsentieren von Programmfavoriten bereitzustellen.

5. Bedienvorrichtung (6) nach einem der vorhergehenden Ansprüche, wobei die Steuereinrichtung (12) dazu eingerichtet ist, als den Verschiebebefehl (29) eine Verschiebe-und-Loslass-Bewegung zu erkennen.

6. Kraftfahrzeug (1) mit einer Bedienvorrichtung (6) nach einem der vorhergehenden Ansprüche, wobei die Bedienvorrichtung (6) mit zumindest einem Fahrzeuggerät (7) gekoppelt ist und dazu ausgelegt ist, bei einer Berührung eines ersten Graphikelements (20) eine vorbestimmte, dem ersten Graphikelement (20) zugeordnete Gerätefunktion (16) bei dem zumindest einen Fahrzeuggerät (7) zu aktivieren.

7. Verfahren zum Betreiben einer Bedienvorrichtung (6) eines Kraftfahrzeugs (1), wobei eine Steuereinrichtung (12) ein erstes Graphikelement (20) auf einer berührungssensitiven ersten Bildschirmeinheit (10) und ein zweites Graphikelement (21) auf einer von der ersten Bildschirmeinheit (10) beabstandet angeordneten berührungssensitiven zweiten Bildschirmeinheit (11), welche durch einen Abstand (24) von der berührungssensitiven ersten Bildschirmeinheit (10) beabstandet ist, darstellt,
**dadurch gekennzeichnet, dass**
- die Steuereinrichtung (12) über die erste Bildschirmeinheit (10, 11) einen vorbestimmten Wechselbefehl (26) empfängt,
- die Steuereinrichtung (12) bei Empfangen des Wechselbefehls (26) zunächst das zweite Graphikelement (21) auf der ersten Bildschirmeinheit (10) darstellt,
- die Steuereinrichtung (12) danach einen vorbestimmten Verschiebebefehl (29) von einem Benutzer (8) über die erste Bildschirmeinheit (10) empfängt,
- in Abhängigkeit von dem Verschiebebefehl (29) für die Darstellung auf der zweiten Bildschirmeinheit (11) eine Relativlage des ersten Graphikelements (20) und des zweiten Graphikelements (21) zueinander einstellt wird,
- in Abhängigkeit von dem Wechselbefehl (26) das erste Graphikelement (20) auf der zweiten Bildschirmeinheit (11) dargestellt wird, wobei
- die Steuereinrichtung (12) als den Wechselbefehl (26) eine Berührung des ersten Graphikelements (20) erkennt, wobei eine Berührdauer der Berührung größer als ein vorbestimmter Mindestwert (27) ist, und
- der Wechselbefehl (26) ein Verschieben des ersten Graphikelements (20) an einen Rand der ersten Bildschirmeinheit (10) durch den Benutzer (8) umfasst.

## Claims

1. Operator control device (6) for a motor vehicle (1), having:
- a touch-sensitive first display screen (10) and a touch-sensitive second display screen (11) spaced apart from the first display screen (10), which are separated from each other by a gap (24), which is sensorless,
- a control device (12) for displaying a first graphic element (20) on the first display screen (10) and a second graphic element (21) on the second display screen (11),
**characterised in that**
the control device (12) is set up,
- to receive a predetermined change command (26) via the first display screen (10),
- on receipt of the change command (26), to initially display the second graphic element (21) on the first display screen (10),
- thereafter to receive a predetermined shift command (29) from a user (8) via the first display screen (10),
- depending on the shift command (29) for the display on the second display screen (11), to adjust a relative position of the first graphic element (20) and the second graphic element (21) to each other,
- depending on the change command (26), to display the first graphic element (20) on the second display screen (11),
wherein
- the control device (12) is set up to recognise a touch on the first graphic element (20) as the change command (26), wherein a duration of the touch is greater than a predetermined minimum value (27), and
- the change command (26) comprises a shift of the first graphic element (20) to an edge of the first display screen (10) by the user (8).

2. Operator control device (6) according to claim 1, wherein the control device (12) is set up, for the second graphic element (21) displayed on the first display screen (10), to only execute the change command (26) already received after receiving a confirmation signal (31).

3. Operator control device (6) according to claim 2, wherein a release of a control element (23) for the user (8) from the first display screen (10) or an activation of a predetermined control panel (30) displayed on the first or the second display screen (10, 11) is signalled by means of the confirmation signal (31).

4. Operator control device (6) according to any of the preceding claims, wherein the control device (12) is set up to provide a container element for presenting programme favourites , as the second graphic element (21).

5. Operator control device (6) according to any of the preceding claims, wherein the control device (12) is set up to recognise a shift and release movement as the shift command (29).

6. Motor vehicle (1) with an operator control device (6) according to any of the preceding claims, wherein the operator control device (6) is coupled with at least one vehicle device (7) and is designed to activate a predetermined device function (16) assigned to the first graphic element (20) for the least one vehicle device (7), when there is a touch on a first graphic element (20)

7. Method for operating an operator control device (6) for a motor vehicle (1), wherein a control device (12) displays a first graphic element (20) on a touch-sensitive first display screen (10) and a second graphic element (21) on a touch-sensitive second display screen (11) spaced apart from the first display screen (10), which is separated from the touch-sensitive first display screen (10) by a gap (24),
**characterised in that**
- the control device (12) receives a predetermined change command (26) via the first display screen (10, 11),
- on receipt of the change command (26), the control device (12) initially displays the second graphic element (21) on the first display screen (10),
- thereafter the control device (12) receives a predetermined shift command (29) from a user (8) via the first display screen (10),
- depending on the shift command (29) for the display on the second display screen (11) a relative position of the first graphic element (20) and the second graphic element (21) to each other is adjusted,
- depending on the change command (26), the first graphic element (20) is displayed on the second display screen (11),
wherein
- the control device (12) recognises a touch on the first graphic element (20) as the change command (26), wherein a duration of the touch is greater than a predetermined minimum value (27), and
- the change command (26) comprises a shift of the first graphic element (20) to an edge of the first display screen (10) by the user (8).

## Revendications

1. Dispositif de commande (6) pour un véhicule automobile (1), présentant :
- une première unité d'écran tactile (10) et une seconde unité d'écran tactile (11) disposée à distance de la première unité d'écran tactile (10), qui sont séparées l'une de l'autre par un intervalle (24) qui est sans capteur,
- un appareil de commande (12) pour représenter un premier élément graphique (20) sur la première unité d'écran (10) et un second élément graphique (21) sur la seconde unité d'écran (11),
**caractérisé en ce que**
l'appareil de commande (12) est conçu pour
- recevoir par le biais de la première unité d'écran (10) un ordre de commutation prédéterminé (26),
- lors de la réception de l'ordre de commutation (26), représenter tout d'abord le second élément graphique (21) sur la première unité d'écran (10),
- ensuite recevoir par le biais de la première unité d'écran (10) un ordre de déplacement prédéterminé (29) d'un utilisateur (8),
- en fonction de l'ordre de déplacement (29) pour la représentation sur la seconde unité d'écran (11), régler une position relative du premier élément graphique (20) et du second élément graphique (21) l'un par rapport à l'autre,
- en fonction de l'ordre de commutation (26), représenter le premier élément graphique (20) sur la seconde unité d'écran (11),
dans lequel
- l'appareil de commande (12) est conçu pour reconnaître en tant qu'ordre de commutation (26) un contact du premier élément graphique (20), dans lequel une durée de contact du contact est plus grande qu'une valeur minimale (27) prédéterminée, et
- l'ordre de commutation (26) comprend un déplacement du premier élément graphique (20) au niveau d'un bord de la première unité d'écran (10) par l'utilisateur (8).

2. Dispositif de commande (6) selon la revendication 1, dans lequel l'appareil de commande (12) est conçu pour exécuter, dans le cas du second élément graphique (21) représenté sur la première unité d'écran (10), l'ordre de commutation (26) déjà reçu, uniquement après la réception d'un signal de confirmation (31).

3. Dispositif de commande (6) selon la revendication 2, dans lequel par le signal de confirmation (31), un déclenchement d'un élément de commande (23) de l'utilisateur (8) est signalé par la première unité d'écran (10) ou un actionnement d'un ordre de commande (30) prédéterminé représenté sur la première ou la seconde unité d'écran (10, 11) est signalé.

4. Dispositif de commande (6) selon l'une quelconque des revendications précédentes, dans lequel l'appareil de commande (12) est conçu pour mettre à disposition en tant que second élément graphique (21) un élément conteneur pour la présentation de favoris de programme.

5. Dispositif de commande (6) selon l'une quelconque des revendications précédentes, dans lequel l'appareil de commande (12) est conçu pour reconnaître en tant qu'ordre de déplacement (29) un mouvement de glisser-déplacer.

6. Véhicule automobile (1) doté d'un dispositif de commande (6) selon l'une quelconque des revendications précédentes, dans lequel le dispositif de commande (6) est couplé à au moins un appareil de véhicule (7) et est configuré pour activer lors d'un contact d'un premier élément graphique (20) une fonction d'appareil (16) prédéterminée, affectée au premier élément graphique (20) dans l'au moins un appareil de véhicule (7).

7. Procédé d'exploitation d'un dispositif de commande (6) d'un véhicule automobile (1), dans lequel un appareil de commande (12) représente un premier élément graphique (20) sur une première unité d'écran tactile (10) et un second élément graphique (21) sur une seconde unité d'écran tactile (11) disposée à distance de la première unité d'écran tactile (10), qui est séparée par un intervalle (24) de la première unité d'écran tactile (10),
**caractérisé en ce que**
- l'appareil de commande (12) reçoit par le biais de la première unité d'écran (10, 11) un ordre de commutation prédéterminé (26),
- l'appareil de commande (12) reçoit lors de la réception de l'ordre de commutation (26), tout d'abord le second élément graphique (21) sur la première unité d'écran (10),
- l'appareil de commande (12) reçoit ensuite un ordre de déplacement prédéterminé (29) d'un utilisateur (8) par le biais de la première unité d'écran (10),
- en fonction de l'ordre de déplacement (29) pour la représentation sur la seconde unité d'écran (11), une position relative du premier élément graphique (20) et du second élément graphique (21) l'un par rapport à l'autre est réglée,
- en fonction de l'ordre de commutation (26), le premier élément graphique (20) sur la seconde unité d'écran (11) est représentée,
dans lequel
- l'appareil de commande (12) reconnaît en tant qu'ordre de commutation (26) un contact du premier élément graphique (20), dans lequel une durée de contact du contact est plus grande qu'une valeur minimale (27) prédéterminée, et
- l'ordre de commutation (26) comprend un déplacement du premier élément graphique (20) au niveau d'un bord de la première unité d'écran (10) par l'utilisateur (8).
